# EUROPÄISCHE PATENTANMELDUNG

(11) **EP 1 233 300 A1**
(43) Veröffentlichungstag der Anmeldung: **21.08.2002**
(21) Anmeldenummer: 02002333.9
(22) Anmeldetag: 31.01.2002
(51) Int. Cl.: G03B 21/58

(54) **Projektionswand mit Halterung**

(30) Priorität: 07.02.2001 DE 10105482
(71) Anmelder: DDC Design & Development GmbH & Co. KG, 90431 Nürnberg (DE)
(72) Erfinder: Leipold, Frank, 90431 Nürnberg (DE)
(74) Vertreter: Thielking, Bodo, Dipl.-Ing.

(57) **Zusammenfassung**

Bei einer Projektionswand (1) mit Halterung weist die Projektionswand (1) zumindest starr ausgebildete Randbereiche (1a) auf, die einen zentralen Projektionsbereich (1b) umschließen und die über einen der Randbereiche (1a) um eine erste Schwenkachse (4) schwenkbeweglich und fixierbar an einer ersten Platte (2) angelenkt ist. Die erste Platte (2) ist ihrerseits um eine zweite Schwenkachse (5) an einer zweiten Platte (3) schwenkbar und fixierbar angelenkt. Die Projektionswand (1) ist für ein Verstauen zwischen erster (2) und zweiter Platte (3) im zusammengeklappten Zustand ausgebildet.

## Beschreibung

Die Erfindung betrifft eine Projektionswand nach dem Oberbegriff des Patentanspruchs 1.

Eine bekannte, mobile Projektionswand weist eine aufrollbare und ausziehbare Projektionsfläche auf, deren Aufwickelvorrichtung in einem Gehäuse untergebracht ist. Die Projektionswand wird mittels einer ausklappbaren, längenveränderlichen Halterung auf dem Boden aufgestellt und mit ihr in der Höhe justiert. Projektionswände werden vielfach auch bei Besprechungen und kleinen Konferenzen in zur Präsentation nicht besonders ausgestatteten Räumen verwendet. Dabei muß die gesamte Projektionsfläche oberhalb der Tischfläche angeordnet werden, damit das Bild für alle Teilnehmer vollständig sichtbar ist. Es muß deshalb die Unterkante der Projektionswand mindestens auf Tischhöhe liegen. Dazu ist eine längenveränderliche Halterung nötig, die selbst im eingeschobenen Zustand noch vergleichsweise lang ist. Ausziehbare Projektionswände haben darüber hinaus den Nachteil, daß sich zumindest nach längerem Gebrauch Falten in der Projektionsfläche bilden können, die die Qualität der Präsentation beeinflussen.

Es gibt auch nicht aufrollbare Projektionsleinwände, die relativ starr und faltenfrei sind. Diese sind jedoch üblicherweise nur ortsfest an vorgegebenen Stellen vorgesehen und praktisch nicht für eine Benutzung in wechselnden Räumen verwendbar.

Ausgehend von diesem Stand der Technik liegt der Erfindung die Aufgabe zugrunde, eine leicht und geschützt zu transportierende Projektionswand für den mobilen Gebrauch zu schaffen, die sich besonders gut für unterschiedliche Projektionsbedingungen in Räumen mit Besprechungstischen eignet.

Die Lösung dieser Aufgabe erfolgt mit den Merkmalen des Patentanspruchs 1.

Die erfindungsgemäße Projektionswand kann in ihrer Neigung und Höhe den Erfordernissen angepaßt werden. Sie kann auf jeder Tischplatte einfach und schnell aufgestellt werden und ist während des Transports gegen Beschädigungen und Verschmutzung geschützt.

Bevorzugte Ausgestaltungen der Erfindung ergeben sich aus den Unteransprüchen.

Nachstehend wird eine bevorzugte Ausführungsform der Erfindung anhand der Zeichnungen im einzelnen beschrieben. Es zeigen:

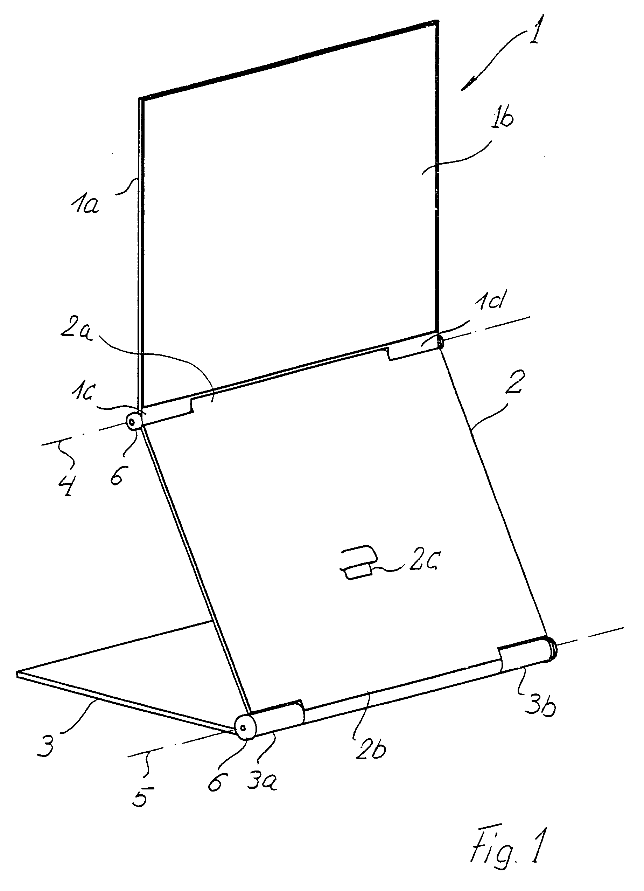

- Figur 1 -: eine perspektivische Ansicht einer Projektionswand mit ihrer Halterung im Gebrauchszustand;

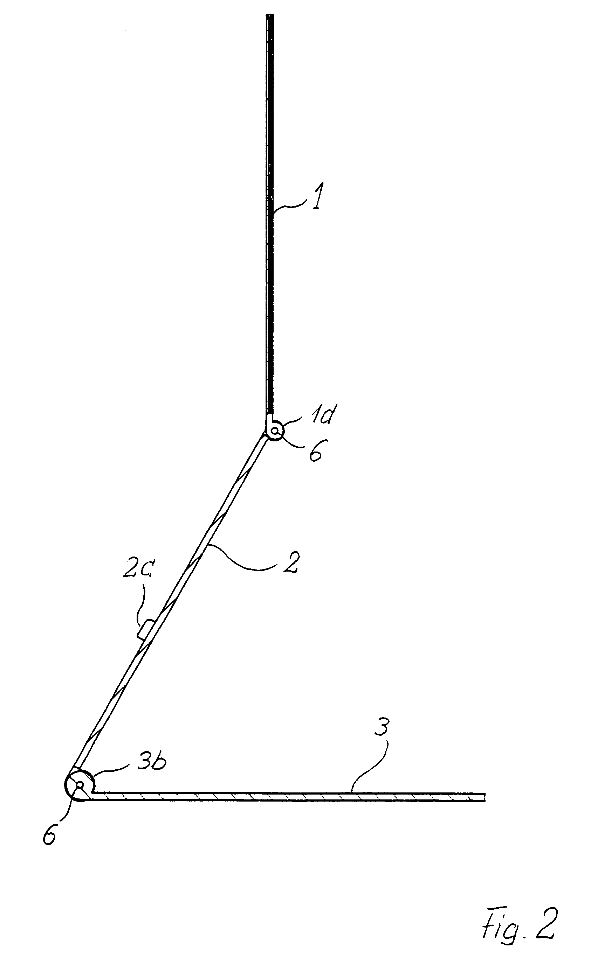

- Figur 2 -: einen Vertikalschnitt durch die Projektionswand gemäß Fig. 1;
- Figur 3 -: eine perspektivische Ansicht der Projektionswand nach Fig. 1 im teilweise eingeklappten Zustand;
- Figur 4 -: eine perspektivische Ansicht einer zum Transport zusammengeklappten Projektionswand nach Fig. 1.

Eine Projektionswand 1 ist gelenkig auf einer Seite mit einer Platte 2 verbunden, die auf der gegenüberliegenden Seite an einer weiteren Platte 3 angelenkt ist. Die Projektionswand 1 weist einen starren Randbereich 1a auf, an dem ein die Projektionsfläche bildende Projektionsbereich 1b aufgespannt ist. An dem der Platte 2 zugewandten Randbereich 1a sind voneinander beabstandete Ösenbereiche 1c und 1d ausgebildet, zwischen denen ein Ösenbereich 2a der Platte 2 angeordnet ist. Die Ösenbereiche 1c, 2a und 1d werden von einem Zapfen 6 durchsetzt. Zapfen 6 und Ösenbereiche 1c, 1d und 2a bilden eine erste Schwenkachse 4, um die die Projektionswand gegenüber der Platte 2 verschwenkbar ist.

Die Platten 2 und 3 sind um eine Schwenkachse 5 gegeneinander verschwenkbar. Dazu ist die Platte 3 mit seitlichen Ösenbereichen 3a und 3b versehen, die an einem mittleren Ösenbereich 2b der Platte 2 stirnseitig anliegen. Zur Verbindung der Platten 2 und 3 dient ebenfalls ein die Ösenbereiche durchsetzender Zapfen 6. Die Platten 2 und 3 bilden in der aufgeklappten Gebrauchslage die Halterung für die Projektionswand 1. Die Neigung der Platten 2 und 3 und der Projektionswand 1 kann durch axiales Anziehen der Zapfen 6 mittels einer Klemmverschraubung fixiert werden. Die Platte 3 dient als Aufstandsfläche beispielsweise auf einer Tischplatte. Durch die Neigung der Platte 2 ist die Höhe der Projektionswand veränderbar. Sie kann zusätzlich beliebig geneigt werden. Zur Aufstellung ist an ihr ein Handgriff 2c vorgesehen.

Der Projektionsbereich 1b kann als Leinwand ausgebildet sein, die ringsum gegenüber dem Randbereich 1a gespannt wird. Dadurch kann sie in der Projektionsfläche keine Falten werfen. Der Projektionsbereich kann alternativ aber auch die Oberfläche einer dünnen jedoch starren Platte sein, die fest mit dem Randbereich 1a verbunden ist.

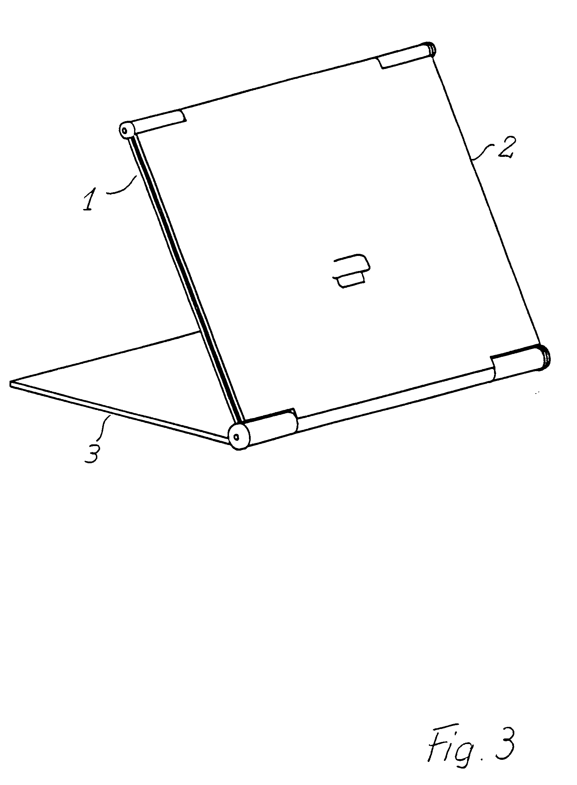

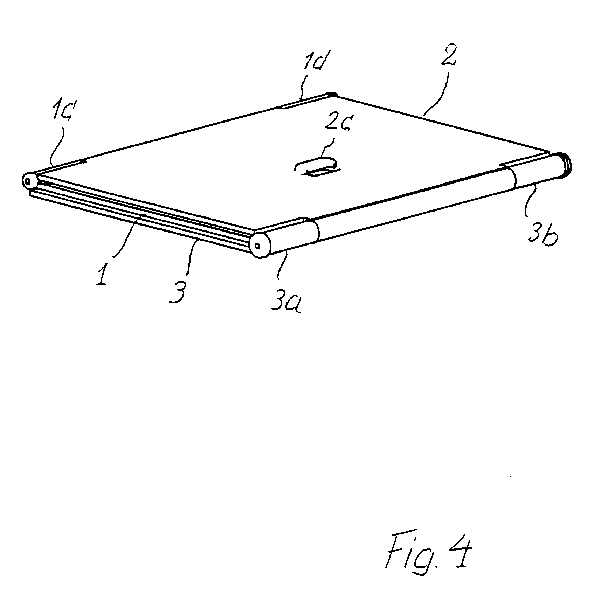

Zum Transport wird die Projektionswand 1 gemäß Fig. 3 an die Platte 2 angeklappt und die Platte 2 gemeinsam mit der Projektionswand um die Schwenkachse 6 auf die Platte 3 geklappt. Wie Fig. 4 zeigt, läßt sich eine so zusammengeklappte Halterung leicht transportieren. Die Projektionswand 1 wird durch die Platten 2 und 3, zwischen denen sie aufbewahrt ist, vor Beschädigungen oder Verschmutzung geschützt.

Eine Anordnung der Platten 2 und 3 auf zwei einander benachbarten Randbereichen 1a ist ebenfalls möglich. Eine Platte 3 wird im Gebrauchszustand dabei gegenüber der Platte 2 nach hinten geklappt, während die Projektionswand 1 nach oben geklappt wird. Ein Höheneinstellung der Projektionswand 1 entfällt dann. Die Projektionswand kann auch unmittelbar auf der Tischfläche aufgestellt werden, wobei die Platten 2 und 3 gegenüber der Projektionswand 1 dann um ca 90° nach hinten verschwenkt werden.

## Patentansprüche

1. Projektionswand (1) mit Halterung,
**dadurch gekennzeichnet,**
**daß** die Projektionswand (1) zumindest starr ausgebildete Randbereiche (1a) aufweist, die einen zentralen Projektionsbereich (1b) umschließen und die über einen der Randbereiche (1a) um eine erste Schwenkachse (4) schwenkbeweglich und fixierbar an einer ersten Platte (2) angelenkt ist, die ihrerseits um eine zweite Schwenkachse (5) an einer zweiten Platte (3) schwenkbar und fixierbar angelenkt ist, und daß die Projektionswand (1) für ein Verstauen zwischen erster und zweiter Platte (2; 3) im zusammengeklappten Zustand ausgebildet ist.

2. Projektionswand nach Anspruch 1,
**dadurch gekennzeichnet,**
**daß** die Projektionswand (1) für Frontseiten- und Rückseitenprojektion ausgebildet ist.

3. Projektionswand nach Anspruch 1 oder 2,
**dadurch gekennzeichnet,**
**daß** die Projektionswand (1) als zumindest im wesentlichen starre Platte ausgebildet ist.

4. Projektionswand nach einem oder mehreren der Ansprüche 1 bis 3,
**dadurch gekennzeichnet,**
**daß** der zentrale Projektionsbereich (1b) aus einem flächigen, textilen und gespannten Material besteht.

5. Projektionswand nach einem oder mehreren der Ansprüche 1 bis 4,
**dadurch gekennzeichnet,**
**daß** die Schwenkachsen (4; 5) durch unmittelbar in Schwenkachsrichtung aneinander anschließende Ösenbereiche (1c; 2a; 1d; bzw. 3a; 2b; 3b) der verschiedenen Wand- oder Plattenelemente und diese axial durchsetzende Zapfen (6) gebildet sind.

6. Projektionswand nach einem oder mehreren der Ansprüche 1 bis 5,
**dadurch gekennzeichnet,**
**daß** an mindestens einer Platte (2) ein Handgriff (2c) vorgesehen ist.

7. Projektionswand nach einem oder mehreren der Ansprüche 1 bis 6,
**dadurch gekennzeichnet,**
**daß** Wand- und Plattenelemente mittels in Schwenkachsenrichtung wirkender, lösbarer Klemmverschraubungen in ihrer gegenseitigen Lage zueinander fixierbar sind.
